# EUROPEAN PATENT SPECIFICATION

(11) **EP 2 668 125 B1**
(45) Date of publication and mention of the grant of the patent: **19.11.2014**
(21) Application number: 12700412.5
(22) Date of filing: 20.01.2012
(51) Int. Cl.: B65G 69/04

(54) **DEVICE AND METHOD FOR DISTRIBUTING POWDER**
VORRICHTUNG UND VERFAHREN ZUR PULVERVERTEILUNG
DISPOSITIF ET PROCÉDÉ DE DISTRIBUTION DE POUDRE

(30) Priority: 24.01.2011 EP 11151786
(43) Date of publication of application: 04.12.2013
(73) Proprietor: Teijin Aramid B.V., 6824 BM Arnhem (NL)
(72) Inventor: VAN DE HEE, Henk, NL-6716 JC Ede (NL)
(74) Representative: Heimann, Anette
(86) International application number: PCT/EP2012/050822
(87) International publication number: WO 2012/101039

(56) References cited:
- WO-A1-2010/108702
- JP-A- 2001 162 612
- US-B1- 6 695 605

## Description

The invention pertains to a double hopper system. The invention pertains also to a method for distributing material using the double hopper system.

Double hopper systems with a material refilling mechanism are well known in the prior art. In document DE 1 611 317 for example a powder container with a storage container is disclosed. The storage container extends into the powder container and contains powder for refilling the powder container. The storage container is inside the powder container movably arranged, whereby the movement occurs mainly in a vertical direction.

In document DE 25 41 972 a powder container and a refill container are disclosed. The powder container is placed inside the refill container and both containers are connected with each other via one refill means. Due to the refill means powder of the refill container can enter the powder container. A first embodiment for the refill means is a movable sleigh, which conveys the powder into the powder container.

Both mentioned documents have the disadvantage that the refilling powder enters the powder container in restricted areas. Due to this the powder level in the powder container is inhomogeneous. Due to the inhomogeneous powder level, different pressures occur locally (via gravity) at the powder in the powder container, which results in inhomogeneous density and distribution of the powder. WO 2010/108702 describes a distributor for e.g. cinder which comprises an upper and a lower distribution stage. The upper distribution stage consists of a hopper with an internal spreading device. The lower distribution stage contains also a divider for the bulk material. WO 2010/108702 aims to spread fine-grained bulk material evenly on rectangular surfaces. The system of WO 2010/108702 corresponds to the preamble of claim 1.

Aim of this invention is to create a double hopper system, which has a homogenous and constantly repeatable powder density and distribution over the entire distribution area and over the entire distribution time.

The aim is achieved by a double hopper system with the features of claim 1.

The first and the second hopper contain material. Preferably the first and the second hopper contain powder and more preferred grained powder. In the following the words "material", "powder" "grained powder" and "grained material" are used synonymously.

Due to the fact, that the second hopper is moveably arranged over at least 3/4 of the length l of the first opening of the first hopper (leaving opening) the powder is homogenously refilled over the length of this opening and therefore over the total length of the powder level surface. Due to this, the unit pressure in the first hopper is homogenous. A constant refill guarantees therefore a homogenous powder distribution by the first opening of the first hopper - this means a constant powder amount over the distribution area of the first opening. As result a belt receive a very homogenous powder distribution especially regarding aerial weight and the density from the double hopper system.

Moveably arranged means, that at least a sideface of the second hopper can move along the distance of l until the sideface gets into contact to one sideface of the first hopper or a separate stop mechanism. Moveably arranged over at least 3/4 of the total length l means, that this sideface of the second hopper can move over at least 3/4 of the total length l of the first hopper. Preferably, the second hopper is moveably arranged over 5/6 and most preferred over the total length l of the first opening of the first hopper.

Preferably, the movement of the second hopper occurs in a plane parallel to the distribution area. This means, the second hopper moves in horizontal direction without a vertical movement and the distribution area of the second hopper is horizontal beneath the first hopper located. In contrast to document DE 1 611 317 (figure 2) the powder falls therefore without large differences on the remaining powder level in the first hopper. In one movement step of the second hopper (this means the second hopper moves along the length I and reverse) the powder level decreases continuously, because powder flows continuously out of the first opening of the first hopper. However, the powder level in the first hopper at a time t*_{N} and a position l*_{N} is constant in comparison with the powder level in the first hopper at the time t*_{N+1} and the position l*_{N+1} whereby N is the number of movement steps and l* is a constant position of the second hopper along the length l and t* is a constant point in time during this movement step. Partial or full compaction of powder in the first hopper as result of adding refilling powder can be avoided or reduced.

Preferably, the second hopper is at least partially apex shaped or rectangular shaped or round shaped and/or the first opening of the second hopper build up a distribution area p. The shaped part of the second hopper is preferably in the part of the first opening of the second hopper. The shaped part of the second hopper influences the powder flow. The shaped part must be in such a way that this is a flow restriction for the powder leaving the second hopper. When using a material (for example powder) with a high friction coefficient the flow restriction caused by the shaped part should be a greater than when using a material with low friction coefficient. The shape of the flow restriction and the used material are therefore adapted to each other in such a way, that the powder flow stops when the powder of the second hopper reaches the defined powder level in the first hopper.

If powder leaves the first opening (preferably a letter box shaped opening) of the first hopper and falls on a surface (belt or paper for example), which has a distance of less than 30mm or preferably less than 2mm to the first opening of the first hopper the distributing area o is built up.

If powder leaves the first opening of the second hopper and falls on a surface (belt or paper for example), which has a distance of less than 2-10 mm to the first opening of the second hopper the distributing area p is built up.

The distributing area p is preferably equal to the area of the first opening of the second hopper. The area, which is refilled by the second hopper is built up by the dimension of the area of the first opening of the second hopper and the movement of the second hopper along the length l and is preferably equal to the area of the second opening of the first hopper. "Powder-hills" in the first hopper during or after the refilling can be avoided. It is also possible, that the refilled area of the second hopper is a little bit smaller in I' direction than the area of the second opening of the first hopper.

Preferably, the double hopper system is usable for powder as material. If powder is applied, the friction between the powder particles and the powder particles and the sidewalls of the hopper system prevents the powder to leave out of the second hopper via the first opening when the first opening of the second hopper is in contact with a defined powder level (or refilled powder level) in the first hopper. The first opening of the second hopper is preferably arranged at a (height) distance d in respect to the first opening of the first hopper. The second hopper can be arranged in such a way to the first hopper, that the first opening of the second hopper is just over the second opening of the first hopper. Also in this case the second hopper extends into the first hopper in the sense of this invention.

In a first embodiment the first hopper is filled first with powder, whereby the powder is filled up to a defined level in the first hopper. Then the second hopper is arranged overhead the first hopper and extends into the first hopper (via the second opening of the first hopper). The second hopper is also filled up with powder, whereby the first opening of the second hopper is in contact with the powder level in the first hopper. At this moment no powder can leave the second hopper due to the powder in the first hopper. So far, as no powder leaves the first hopper (via the first opening of the first hopper), the powder level in the first hopper is constant at defined powder level and no powder flows out of the first opening of the second hopper. If powder leaves the first hopper and the powder level of the first hopper decreases, a gap between the powder level of the first hopper and the first opening of the second hopper arises. Due to this gap powder can flow out of the first opening of the second hopper, and at the same time the second hopper moves simultaneously along the total length l. The powder-flow out of the first opening of the second hopper occurs homogeneously over the distribution area p. As the defined powder level in the first hopper is restored, no gap between the defined powder level in the first hopper and the first opening of the second hopper exists. The powder-flow of the second hopper stops. In a second embodiment the first hopper is filled with material by the second hopper. This means material, for example powder, is filled into the second hopper via the second opening and fills up the first hopper. While the second hopper fills up the first hopper, the second hopper moves along the length l of first opening of the first hopper. If a defined material level in the first hopper is achieved, the second hopper does not longer fills up the first hopper and the material remains in the second hopper.

Preferably, the first hopper exhibits a vibrating means. Preferably, the first hopper exhibits a vibrating means in the area of the first opening of the first hopper. Most preferred, the first opening of the first hopper has a "letterbox" design with a letterbox opening and the vibrating means is arranged on this letterbox opening. Preferably, the vibrating means is a vibrating blade

The letterbox opening is responsible for the volume of material, which leaves the first opening of the first hopper. This means that the letterbox opening doses the volume of material, which leaves the first opening of the first hopper. Due to the letterbox opening a powder layer of constant thickness is produced. The aerial weight, of the produced powder layer depends on the material level and the powder density in the first hopper. It seems that the unit pressure (or hydrostatic pressure) inside the first hopper is responsible for a homogenously material density, whereby a homogenous unit pressure depends on a homogenous powder level inside the first hopper. Areas with different material levels inside the first hopper have different unit pressures. As a result different densities of the out coming material occur. Due to this a homogeneous material level in the first hopper is important, when a homogeneously density output of material over a long manufacturing period is desired.

When the volumetric material flow of the first opening of the first hopper is constant the defined powder level will drop at a constant rate. The refilling process is executed by the movement of the second hopper, which performs a transverse movement with a constant speed. Therefore, the powder level in the first hopper can vary somewhat depending on the material outflow and the traversing speed. The traversing speed of the second hopper must be chosen sufficiently high in order to reduce this effect.

A further aspect of the invention is a method for distributing material using a double hopper system as described above. Preferably, the applied material in the method is a grained material.

The optimal dimensions of the letter box opening of the first hopper and the shaped form of the second hopper depend on the grain size and the internal friction of the powder used. The dimensions of the second hopper, especially the shaped form of the second hopper, are chosen in such a way that the unit pressure at the outlet opening is small but high enough to render free powder flowing without bridge building. The dimensions of the first hopper, especially the letter box part, are chosen in such a way that the unit pressure at the outlet opening is also low, also free flowing of the powder and the static pressure is as little as possible dependent on the filling level.

For the method, the second hopper moves along at least 3/4 of the entire length l of the first opening of the first hopper during the refilling procedure of the first hopper.

Preferably, the first opening of the second hopper is in contact with the powder of the first hopper, when the first hopper has a defined material level x. In this case preferably no material of the second hopper can leave the second hopper via the first opening of the second hopper.

It seems that the grained material in the second hopper cannot leave the first opening of the second hopper due to friction in the contact area between grained material in the first hopper and grained material in the second hopper.

It is further preferred, when material leaves the first hopper via the first opening the material level x of the first hopper is reduced and the first opening of the second hopper loses contact to the material of the first hopper. Material of the second hopper leaves the second hopper via the first opening and enters the first hopper via the second opening of the first hopper.

Preferably, the second hopper moves along the length l.

Preferably, the second hopper moves continuously along the length l. This means, the second hopper moves during the refilling process along the length l and also when the defined powder level x is achieved in the first hopper. Preferably a stop of the outflow of the first hopper causes the traversing movement of the second hopper stop. In an especially preferred embodiment the first and the second hopper runs always during the process.

For better understanding - the first hopper and the second hopper are filled with grained material (like powder), whereby the first hopper has a defined material level x and the first opening of the second hopper is arranged in contact with the material of the first hopper such, that no material of the second hopper can leave the second hopper via the first opening of the second hopper. If material flows out of the first hopper via the first opening of the first hopper, the defined material level x of the first hopper is reduced and the first opening of the second hopper loses contact with the material inside the first hopper. In this case material of the second hopper can leave the second hopper via the first opening of the second hopper and enters the first hopper via the second opening of the first hopper. The first hopper is filled up in this way until the defined material level x in the first hopper is restored. Preferably, the second hopper moves during the refilling procedure along the length l. It is further preferred that the second hopper moves always along the length l -w'.

It is preferred, that the second hopper refills the defined material level x by moving once along the length l. It is further preferred, that the second hopper refills the defined material level x by moving along the length l and back.

Preferably, the material leaves the first opening of the first hopper via gravity. It is further preferred that the material leaves also the first opening of the second hopper via gravity. In these preferred embodiments no additional force (besides gravity and the unit pressure of material arranged above) is necessary.

Preferably, the material, which leaves the first opening of the first hopper, is homogenously distributed on a surface via the vibrating means. This ensures that the powder is flowing easier and differences in powder height and density are minimized, so a layer with constant aerial weight is created. A homogeneous material layer is formed, which has a constant thickness, density and weight per area.

The invention is further elucidated by example and figures, which are given below.
- Figure 1: schematically shows a double hopper system.
- Figure 2: schematically shows a second hopper during the refilling procedure.
- Figure 3: schematically shows a part of a first hopper.
- Figure 4: schematically shows a part of a first hopper in detail.
- Figure 5: schematically shows a first and a second hopper.

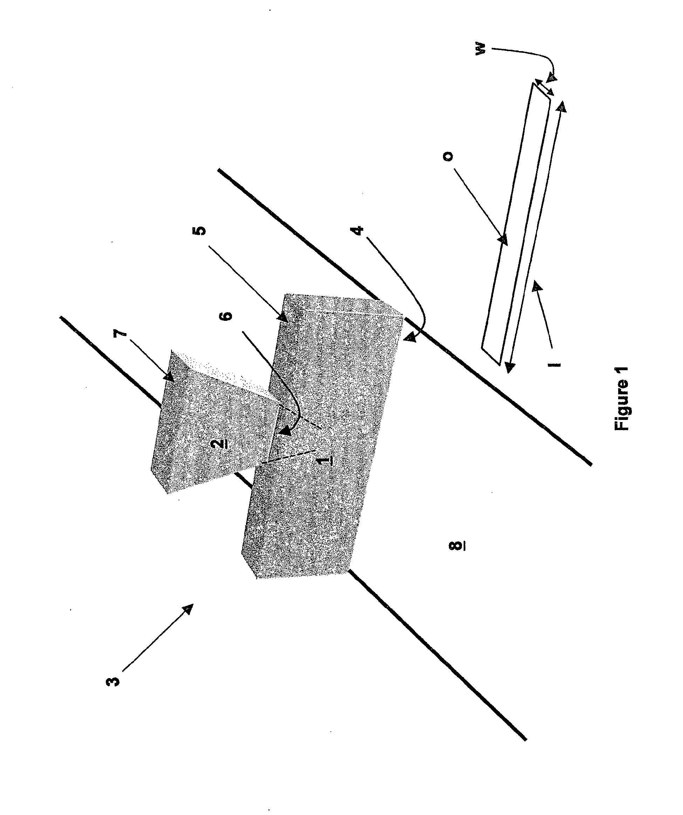

In figure 1 a double hopper system 3, comprising at least a first hopper 1 and a second hopper 2 is shown. The first hopper 1 has a first opening 4 and a second opening 5, the second hopper 2 has a first opening 6 and a second opening 7. The second hopper 2 extends partially into the second opening 5 of the first hopper 1. The first opening 4 of the first hopper 1 builds up a distribution area o with a length I and a width w, from which material flows out of the first opening 4 of the first hopper 1. In figure 1 this distribution area o is shown at a distance from the hopper system 3 for a clear picture. The dimension of the distributing area o is approximately equal with the area of the first opening 4 of the first hopper 1, whereby the first opening 4 of the first hopper 1 is built up as a letterbox shaped opening at the front side. The second hopper 2 is moveably arranged regarding the first hopper 1, whereby the second hopper 2 can move along at least 3/4 of the length of I. Preferably, the second hopper 2 moves along I until a side face of the second hopper 2 arrives a side face of the first hopper 1 inside the second opening 5 of the first hopper 1. A belt 8 or paper or foil is arranged below the first opening 4 of the first hopper 1 to collect the material leaving the first hopper 1. The first opening 6 of the second hopper 2 has a width w and a length l', which is approximately equal to the distributing area p (not shown in figure 1) of the first opening 6 of the second hopper 2. The shape of the second hopper 2 is optimized in such a way that the powder flows out of the first opening 6 of the second hopper 2 and refills the space that has been created by the decreasing powder level in the first hopper 1. The angle of the sidewalls of the second hopper 2 and the dimension of the first opening 6 of the second hopper 2 depending at least on the flowing behavior of the powder material (internal friction). This means a shaped part of the second hopper 2 is optimized in such a way that the static pressure is minimal, the powder is free flowing and no bridge formation is occurring. The filling level of the second hopper 2 has only little effects in respect to the achieved powder material on the paper. Therefore, refilling the second hopper 2 is less critical and can be done on a continuous or discontinuous basis. Preferably, the second hopper is kept always totally filled.

Preferably, l' of the second hopper 2 is approximately equal or a bit smaller than b (first hopper 1). Due to the movement of the second hopper along the length l the second hopper 2 covers the surface of the second opening 5 of the first hopper 1.

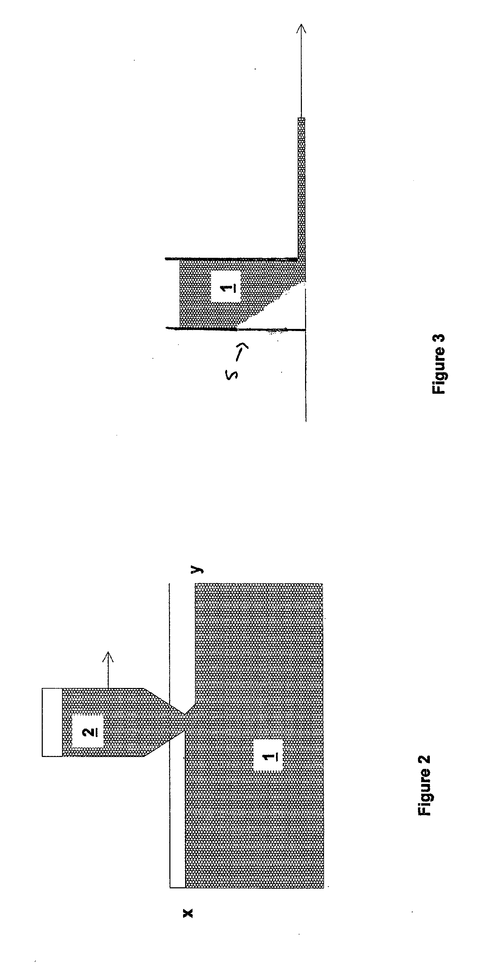

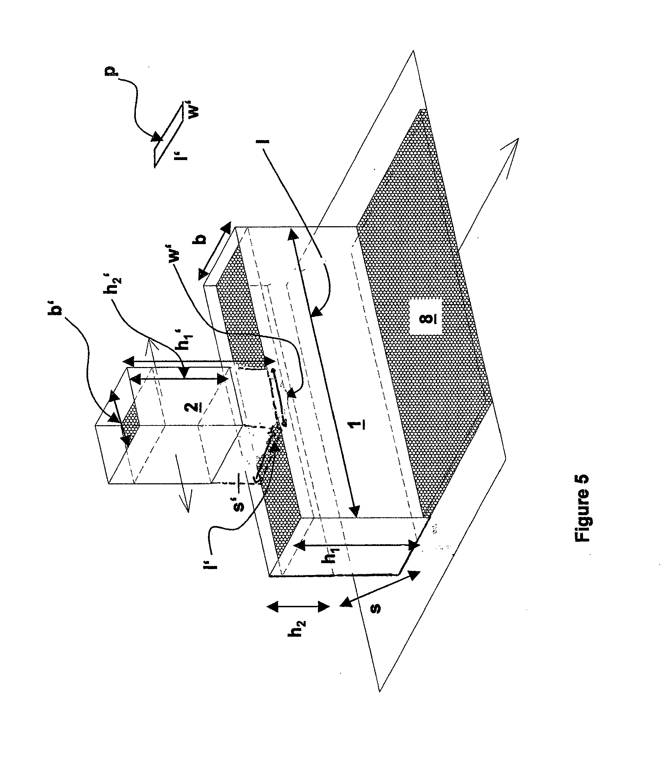

In figure 2 a part of the second hopper 2 and the first hopper 1 during the refilling procedure is shown (side-face). The second hopper 2 moves along the length l of the first hopper (in arrow direction) and material leaves the first opening 6 of the second hopper 2 to fill up the material level y to a defined material level x. If the material level x is restored again, the material of the first hopper 1 is in contact with the first opening 6 of the second hopper 2 so that no material can leave the second hopper 2 via the first opening 6 of the second hopper 2 anymore. The second hopper 2 makes preferably a continuously traversing movement in the length direction l of the first hopper 1 and reverse, this means perpendicular and preferably horizontal to the production direction (the first hopper 1 makes a movement in production direction in respect to the static belt 8 or the belt 8 makes a move in production direction in respect to the static first hopper 1). The second hopper 2 moves preferably at a constant speed from left to right. When the right side face of the second hopper 2 (or the first opening 6) reaches the right side face of the first hopper 1, the movement stops and it start moving from the right to left again at a constant speed until the left side face of the second hopper 2 (or the first opening 6) reaches the left side face of the first hopper 1. The speed of movement of the second hopper 2 can be coupled to the speed of the moving of the first hopper 1 (or the belt 8), this means on the producing speed. During the production the powder is continuously flowing out of the first opening 4 in letterbox design of the first hopper 1, so that powder level in the first hopper 1 is lowering at a constant rate. A part of the second hopper 2 can be special shaped and comprises the first opening 6 of the second hopper 2. The first opening 6 of the second hopper 2 builds up the distribution area p (see figure 5, for a clear picture offset of the first opening 6 of the second hopper 2). The distribution area p has a length of l' and a width of w'. It is preferred, that the length I' of the distribution area p is equal or less smaller or approximately equal to the width b of the second opening 5 of the first hopper 1

A third method to start is to fill the first hopper 1 close to the desired level and then use hopper 2 to adjust it exactly to the desired powder level x.

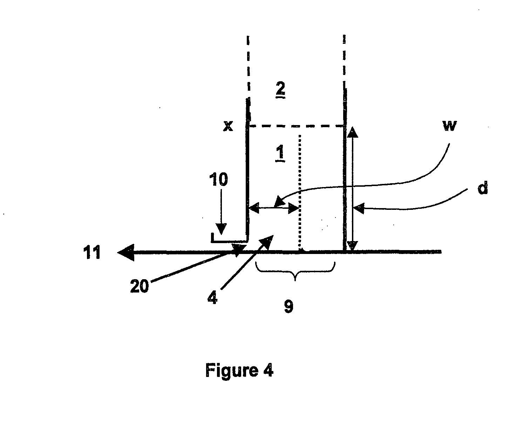

Figure 3 shows a detail part of the first hopper 1. A surface s is in contact with the belt 8. A material is inside of the first hopper 1, whereby only a part of the material is illustrated. In a preferred embodiment a letterbox opening 20 (20 is part of fig 4) is built up.

Figure 4 shows schematically in detail a part of the first hopper 1 with a part of the second hopper 2 (dashed lines) in side view. The first opening 4 of the first hopper 1 is designed as letterbox 9 with a letterbox opening 20, a surface s and a vibrating blade 10 on the top side. The vibrating blade 10 and the form of the first opening 4 of the first hopper 1 improve a homogenous flowing behavior of the powder. Among other things due to the letterbox opening 20 and the vibrating blade 10 the material can be distributed very homogeneously on the belt 8 in transport direction 11. It should be noted, that the distribution area o could be a bit greater than an area built up by the first opening 4 of the first hopper 1. Due to a distance between first opening 4 of the first hopper 1 and the belt 8 and/or the use of a vibrating means 10, powder could be distributed in distribution area o. The second hopper 2 extends into the second opening 5 of the first hopper 1. If the material level of the first hopper 1 conforms to the defined material level x, the first opening 6 of the second hopper 2 is in contact with the material of the first hopper 1.

In figure 5 the first hopper 1 and the second hopper 2 are shown. The second opening 7 of the second hopper 2 has a width b'. The first opening 6 of the second hopper has a width w' and a length I', whereby the length I' of the first opening 6 of the second hopper 2 is approximately equal to or a bit smaller than the width b of the second opening 5 of the first hopper 1. The first hopper 1 has a total height of h₁, which is split into a part h₂ and a surface s. Due to the angular part s the width w of the first opening 4 of the first hopper 1 is different from the width b of the second opening 5 of the first hopper 1.

### Reference numbers

- 1: first hopper
- 2: second hopper
- 3: double hopper system
- 4: first opening, first hopper
- 5: second opening, first hopper
- 6: first opening, second hopper
- 7: second opening, first hopper
- 8: belt
- 9: letterbox
- 10: vibrating means
- 11: transport direction
- 20: letterbox opening
- l: length, distribution area o
- w: width, distribution area o
- o: distribution area, build up by the first opening of the first hopper
- l': length, distribution area p
- w': width, distribution area p
- p: distribution area, build up by the first opening of the second hopper
- x: defined material level
- y: (actually) material level
- d: distance
- s: surface (first hopper)

- s': shaped part (second hopper)
- b: width of the second opening of the first hopper
- b': width of the second opening of the second hopper
- h₁: total height of the first hopper
- h₂: cuboids part of the first hopper
- h₁': total height of the second hopper
- h₂': cuboids part of the second hopper

## Claims

1. Double hopper system (3), comprising a first hopper (1) and a second hopper (2), the first hopper (1) has a first opening (4) and a second opening (5) and the second hopper (2) is arranged overhead the second opening (5) of the first hopper (1) and extends into the second opening (5) of the first hopper (1), the first opening (4) of the first hopper (1) has a length (I), **characterized in that** the second hopper (2) is moveably arranged with respect to the first hopper (1), whereby the second hopper (2) is moveable over at least 3/4 of the length (I).

2. Double hopper system (3) according to claim 1, whereby a distribution area (o) is built up by the first opening (4) of the first hopper (1).

3. Double hopper system (3) according to claim 2, whereby the second hopper (2) is moveably arranged with respect to the first hopper (1) in such a way that the movement can take place in a plane parallel to the distribution area (o).

4. Double hopper system (3) according to claim 2, whereby the second hopper (2) is moveably arranged in such a way that the movement takes place horizontally only.

5. Double hopper system (3), according to at least one of the preceding claims, whereby the second hopper (2) exhibits a first opening (6) and a distribution area (p) is built up by the first opening (6) of the second hopper (2).

6. Double hopper system (3), according to at least one of the preceding claims, whereby the second hopper (2) has a flow restriction.

7. Double hopper system (3), according to claim 6, whereby the flow restriction occurs due to a partially apex shaped or rectangular shaped or triangular shaped form of the second hopper (2)

8. Double hopper system (3) according to at least one of the preceding claims, whereby the first opening (6) of the second hopper (2) is arranged at a distance (d) in respect to the first opening (4) of the first hopper (1).

9. Double hopper system (3) according to at least one of the preceding claims, whereby the first hopper (1) exhibits a vibrating means (10) on one side face of the first opening (4) of the first hopper (1).

10. Method for distributing material using a double hopper system (3) according to at least one of the claims 1 to 9, whereby the second hopper (2) moves along at least 3/4 of the length (I) of the first opening (4) of the first hopper (1) during refill of the first hopper (1).

11. Method according to claim 10, whereby no material of the second hopper (2) can leave the second hopper (2) via the first opening (6) of the second hopper (2), when the first hopper (1) has a material level (x) and the first opening (6) of the second hopper (2) is arranged in contact with the material of the first hopper (1).

12. Method according to claim 10 or 11, whereby material of the second hopper (2) leaves the second hopper (2) via the first opening (6) and enters the first hopper (1) via the second opening (5) of the first hopper (1), when material leaves the first hopper (1) via the first opening (4) and the material level (x) of the first hopper (1) is reduced and the first opening (6) of the second hopper (2) loses the contact to the material of the first hopper (1).

13. Method according to claim 11, whereby the second hopper (2) moves along the length (I) until the defined material level (x) is restored.

14. Method according to claim 11, whereby the second hopper (2) continuously moves along the length (I).

## Patentansprüche

1. Zuführbehälter-Zweifachsystem (3), das einen ersten Zuführbehälter (1) und einen zweiten Zuführbehälter (2) umfasst, wobei der erste Zuführbehälter (1) eine erste Öffnung (4) und eine zweite Öffnung (5) aufweist und der zweite Zuführbehälter (2) über der zweiten Öffnung (5) des ersten Zuführbehälters (1) angeordnet ist und in die zweite Öffnung (5) des ersten Zuführbehälters (1) hinein verläuft und die erste Öffnung (4) des ersten Zuführbehälters (1) eine Länge (l) aufweist,
**dadurch gekennzeichnet, dass** der zweite Zuführbehälter (2) bezogen auf den ersten Zuführbehälter (1) beweglich angeordnet ist, wobei der zweite Zuführbehälter (2) über zumindest 3/4 der Länge (l) beweglich ist.

2. Zuführbehälter-Zweifachsystem (3) nach Anspruch 1, wobei durch die erste Öffnung (4) des ersten Zuführbehälters (1) ein Verteilungsbereich (o) erzeugt wird.

3. Zuführbehälter-Zweifachsystem (3) nach Anspruch 2, wobei der zweite Zuführbehälter (2) bezogen auf den ersten Zuführbehälter (1) derart beweglich angeordnet ist, dass die Bewegung in einer Ebene parallel zum Verteilungsbereich (o) erfolgen kann.

4. Zuführbehälter-Zweifachsystem (3) nach Anspruch 2, wobei der zweite Zuführbehälter (2) derart beweglich angeordnet ist, dass die Bewegung nur waagerecht erfolgt.

5. Zuführbehälter-Zweifachsystem (3) nach mindestens einem der vorhergehenden Ansprüche, wobei der zweite Zuführbehälter (2) eine erste Öffnung (6) aufweist und durch die erste Öffnung (6) des zweiten Zuführbehälters (2) ein Verteilungsbereich (p) erzeugt wird.

6. Zuführbehälter-Zweifachsystem (3) nach mindestens einem der vorhergehenden Ansprüche, wobei der zweite Zuführbehälter (2) eine Strömungsbeschränkung aufweist.

7. Zuführbehälter-Zweifachsystem (3) nach Anspruch 6, wobei es aufgrund einer teilweise spitz geformten oder rechteckig geformten oder dreieckig geformten Gestalt des zweiten Zuführbehälters (2) zu der Strömungsverengung kommt.

8. Zuführbehälter-Zweifachsystem (3) nach mindestens einem der vorhergehenden Ansprüche, wobei die erste Öffnung (6) des zweiten Zuführbehälters (2) in einem Abstand (d) zu der ersten Öffnung (4) des ersten Zuführbehälters (1) angeordnet ist.

9. Zuführbehälter-Zweifachsystem (3) nach mindestens einem der vorhergehenden Ansprüche, wobei der erste Zuführbehälter (1) ein vibrierendes Mittel (10) auf einer Seitenfläche der ersten Öffnung (4) des ersten Zuführbehälters (1) aufweist.

10. Verfahren zum Verteilen von Material unter Verwendung eines Zuführbehälter-Zweifachsystems (3) nach mindestens einem der Ansprüche 1 bis 9, wobei sich der zweite Zuführbehälter (2) während des Auffüllens des ersten Zuführbehälters (1) entlang mindestens 3/4 der Länge (l) der ersten Öffnung (4) des ersten Zuführbehälters (1) bewegt.

11. Verfahren nach Anspruch 10, wobei kein Material des zweiten Zuführbehälters (2) über die erste Öffnung (6) des zweiten Zuführbehälters (2) aus dem zweiten Zuführbehälter (2) gelangen kann, wenn der erste Zuführbehälter (1) einen Materialfüllstand (x) aufweist und die erste Öffnung (6) des zweiten Zuführbehälters (2) in Kontakt mit dem Material des ersten Zuführbehälters (1) angeordnet ist.

12. Verfahren nach Anspruch 10 oder 11, wobei Material des zweiten Zuführbehälters (2) über die erste Öffnung (6) aus dem zweiten Zuführbehälter (2) gelangt und über die zweite Öffnung (5) des ersten Zuführbehälters (1) in den ersten Zuführbehälter (1) gelangt, wenn Material über die erste Öffnung (4) aus dem ersten Zuführbehälter (1) gelangt und der Materialfüllstand (x) des ersten Zuführbehälters (1) sinkt und die erste Öffnung (6) des zweiten Zuführbehälters (2) den Kontakt zu dem Material des ersten Zuführbehälters (1) verliert.

13. Verfahren nach Anspruch 11, wobei sich der zweite Zuführbehälter (2) entlang der Länge (l) bewegt, bis der festgelegte Materialfüllstand (x) wiederhergestellt ist.

14. Verfahren nach Anspruch 11, wobei sich der zweite Zuführbehälter (2) kontinuierlich entlang der Länge (l) bewegt.

## Revendications

1. Système de trémie double (3), comprenant une première trémie (1) et une deuxième trémie (2), la première trémie (1) comporte une première ouverture (4) et une deuxième ouverture (5) et la deuxième trémie (2) est disposée au-dessus de la deuxième ouverture (5) de la première trémie (1) et s'étend dans la deuxième ouverture (5) de la première trémie (1), la première ouverture (4) de la première trémie (1) a une longueur (1), **caractérisé en ce que** la deuxième trémie (2) est disposée de manière mobile par rapport à la première trémie (1), la deuxième trémie (2) étant mobile sur au moins 3/4 de la longueur (1).

2. Système de trémie double (3) selon la revendication 1, dans lequel une zone de distribution (o) est constituée par la première ouverture (4) de la première trémie (1).

3. Système de trémie double (3) selon la revendication 2, dans lequel la deuxième trémie (2) est disposée de manière mobile par rapport à la première trémie (1) de telle manière que le mouvement peut se faire dans un plan parallèle à la zone de distribution (o).

4. Système de trémie double (3) selon la revendication 2, dans lequel la deuxième trémie (2) est disposée de manière mobile de telle manière que le mouvement ne se fait qu'horizontalement.

5. Système de trémie double (3) selon au moins l'une des revendications précédentes, dans lequel la deuxième trémie (2) présente une première ouverture (6) et une zone de distribution (p) est constituée par la première ouverture (6) de la deuxième trémie (2).

6. Système de trémie double (3) selon au moins l'une des revendications précédentes, dans lequel la deuxième trémie (2) comporte un étranglement.

7. Système de trémie double (3) selon la revendication 6, dans lequel l'étranglement se produit en raison d'une forme de la deuxième trémie (2) partiellement en forme de sommet ou de forme rectangulaire ou de forme triangulaire.

8. Système de trémie double (3) selon au moins l'une des revendications précédentes, dans lequel la première ouverture (6) de la deuxième trémie (2) est placée à une distance (d) de la première ouverture (4) de la première trémie (1).

9. Système de trémie double (3) selon au moins l'une des revendications précédentes, dans lequel la première trémie (1) présente un moyen vibrant (10) sur une face latérale de la première ouverture (4) de la première trémie (1).

10. Procédé de distribution de matériau utilisant un système de trémie double (3) selon au moins l'une des revendications 1 à 9, dans lequel la deuxième trémie (2) se déplace sur au moins 3/4 de la longueur (1) de la première ouverture (4) de la première trémie (1) pendant la recharge de la première trémie (1).

11. Procédé selon la revendication 10, dans lequel le matériau présent dans la deuxième trémie (2) ne peut pas quitter la deuxième trémie (2) par la première ouverture (6) de la deuxième trémie (2), quand la première trémie (1) a un niveau de matériau (x) et la première ouverture (6) de la deuxième trémie (2) est en contact avec le matériau de la première trémie (1).

12. Procédé selon la revendication 10 ou 11, dans lequel le matériau présent dans la deuxième trémie (2) quitte la deuxième trémie (2) par la première ouverture (6) et entre dans la première trémie (1) par la deuxième ouverture (5) de la première trémie (1), quand le matériau quitte la première trémie (1) par la première ouverture (4) et le niveau de matériau (x) de la première trémie (1) est réduit et la première ouverture (6) de la deuxième trémie (2) perd le contact avec le matériau de la première trémie (1).

13. Procédé selon la revendication 11, dans lequel la deuxième trémie (2) se déplace sur la longueur (1) jusqu'à ce que le niveau de matériau défini (x) soit rétabli.

14. Procédé selon la revendication 11, dans lequel la deuxième trémie (2) se déplace de façon continue sur la longueur (1).
